# EUROPÄISCHE PATENTSCHRIFT

(11) **EP 1 617 123 B1**
(45) Veröffentlichungstag und Bekanntmachung des Hinweises auf die Patenterteilung: **16.01.2008**
(21) Anmeldenummer: 05014171.2
(22) Anmeldetag: 30.06.2005
(51) Int. Cl.: F16L 33/22

(54) **Rohr-Verbindungsbaugruppe, Rohr-Baugruppe mit einer derartigen Rohr-Verbindungsbaugruppe sowie Schiebehülse für diese Rohr-Verbindungsbaugruppe oder für diese Rohr-Baugruppe**
Connection assembly for pipe, pipe assembly with such a connection assembly and sliding sleeve for this connection assembly for pipe or for pipe assembly
Ensemble de connexion pour tuyau, ensemble de tuyaux avec une telle connexion et bague coulissante pour cet ensemble de connexion pour tuyau ou pour ensemble de tuyaux

(30) Priorität: 17.07.2004 DE 202004011236 U
(43) Veröffentlichungstag der Anmeldung: 18.01.2006
(73) Patentinhaber: REHAU AG + Co, 95111 Rehau (DE)
(72) Erfinder: Haunstetter, Karl-Heinz, 90768 Fürth (DE)

(56) Entgegenhaltungen:
- DE-A1- 10 130 003
- DE-C1- 19 756 074
- FR-A- 1 255 369
- FR-A- 2 556 815
- GB-A- 2 049 856

## Beschreibung

Die Erfindung betrifft eine Rohr-Verbindungsbaugruppe nach dem Oberbegriff des Anspruchs 1.

Eine Rohr-Verbindungsbaugruppe nach dem Oberbegriff des Anspruchs 1 sowie eine Rohr-Baugruppe, umfassend einen Stützkörper, eine Schiebehülse und ein zwischen diesen einpressbares Rohr, sind durch offenkundige Vorbenutzung sowie aus der DE 197 56 074 C1, DE 101 30 003 A1, DE 201 09 784 U1, DE 199 56 000 C1, DE 195 14 210 C2, DE 42 39 705 C2 und GB 2 049 856 A, die als nächstliegender Stand der Technik angesehen wird, bekannt.

In der Praxis ist bei diesen bekannten Baugruppen insbesondere bei Anwendungen mit häufigen Temperaturwechseln eine Undichtigkeit nicht auszuschließen beziehungsweise nur mit großem Herstellungs- beziehungsweise Montageaufwand vermeidbar.

Es ist daher eine Aufgabe der vorliegenden Erfindung, eine Rohr-Verbindungsbaugruppe der eingangs genannten Art derart weiterzubilden, dass auch bei Anwendungen mit häufigen Temperaturwechseln eine Dichtigkeit sicher gegeben ist, wobei sich der Fertigungsbeziehungsweise Montageaufwand in Grenzen halten soll.

Diese Aufgabe ist erfindungsgemäß gelöst durch eine Rohr-Verbindungsbaugruppe mit den Merkmalen des Kennzeichnungsteils des Anspruchs 1.

Erfindungsgemäß wurde erkannt, dass die Undichtigkeiten beim Stand der Technik darauf zurückzuführen sind, dass die einzelnen Komponenten der Rohr-Verbindungsbaugruppe aufgrund ihres unterschiedlichen Längenausdehnungsverhaltens nicht dauerhaft dichtend aneinander anliegen. Ein Hauptproblem, das erkannt und gelöst wurde, liegt dabei darin, dass die Schiebehülse nach dem Stand der Technik bei einer Temperaturänderung der Rohr-Verbindungsbaugruppe ihren Innenumfang kaum ändert. Dies führt dazu, dass sich das eingepresste Rohr bei einer Erwärmung nicht im erforderlichen Maße im Umfang ausweiten kann, sodass es zu Fließvorgängen des Rohrmaterials in axialer Richtung beziehungsweise zu einer plastischen Formänderung des Rohrs und/oder des Stützkörpers kommt. Insbesondere dann, wenn Temperaturzyklen mit Erwärmung und darauffolgender Abkühlung oft aufeinanderfolgen, führt dies auf Dauer dazu, dass die Presskraft zwischen dem Stützkörper und dem Rohr immer geringer wird. Dies ist die Ursache für die beim Stand der Technik beobachteten Undichtigkeiten. Durch die erfindungsgemäß ausgebildete Schiebehülse ist gewährleistet, dass diese bei einer temperaturbedingten Ausdehnung oder Kontraktion auch ihren Umfang ändern kann. Die Schiebehülse kann daher "atmen", was nachfolgend auch als Umfangsänderungswirkung bezeichnet wird. Bei einer Erwärmung kann die Schiebehülse also im Umfang zunehmen. Dies ermöglicht es dem gepressten Rohr, sich ebenfalls im Umfang auszuweiten, sodass die unerwünschten Fließvorgänge beziehungsweise plastischen Verformungen reduziert sind beziehungsweise gar nicht auftreten. Auch nach vielen Temperaturwechseln bleibt auf diese Weise die Dichtigkeit der Rohr-Verbindungsbaugruppe erhalten.

Bei einer Schiebehülse gemäß der Erfindung wird der erfindungsgemäße Effekt der Änderung des inneren Umfangs durch den Einsatz mindestens eines Radiusänderungsabschnitts bewirkt. Bei einer Ausdehnung wird dieser Radiusänderungsabschnitt gestreckt, sodass sich der Umfang der Schiebehülse vergrößern kann. Bei einem thermischen Zusammenziehen wird die Schiebehülse im Bereich des Radiusänderungsabschnitts gestaucht, sodass ebenfalls eine gewünschte Änderung des inneren Umfangs, nämlich eine Verkleinerung, stattfinden kann. Damit der Radiusänderungsabschnitt längs des eingepressten Rohr-Endabschnitts die gewünschte Umfangsänderungswirkung haben kann, muss er sich zumindest auch längs der Längsachse der Schiebehülse erstrecken. Ein gleichzeitiger Erstreckungsanteil quer zu dieser Längsachse ist ebenfalls möglich.

Eine Formung des Radiusänderungsabschnitts nach Anspruch 2 vermeidet große lokale Spannungsänderungen im Pressbereich. Dies führt zu einer möglichst gleichmäßigen Presskraft, sodass eine gleichmäßige Dichtheit der Rohr-Verbindungsbaugruppe resultiert.

Ein Dimensionsverhältnis nach Anspruch 3 hat sich als besonders geeignet zur Erzielung eines guten Dichtergebnisses herausgestellt. Ein größerer Innenradiushub kann dazu führen, dass lokal die Presskraft, die die Schiebehülse auf das Rohr ausübt, zu gering wird. Ein zu kleiner Innenradiushub führt dazu, dass keine ausreichende Streckung beziehungsweise Stauchung des Umfangs der Schiebehülse als Folge der thermischen Längenänderung möglich ist.

Eine Mehrzahl von Radiusänderungsabschnitten nach Anspruch 4 hat sich als besonders effektiv herausgestellt.

Eine Hülsenwand nach Anspruch 5 oder 6 hat fertigungstechnische Vorteile und führt zudem zu einem gleichmäßigen Presskraftverlauf.

Die Aufschiebeabschnitte nach Anspruch 7 oder 8 weisen fertigungstechnische Vorteile auf und führen zudem zu einer besseren Flexibilität bei gleichmäßigen Presskraftverlauf.

Radiusänderungsabschnitte nach den Ansprüchen 9, 10 oder 11 haben sich als besonders geeignete alternative Ausgestaltungsmöglichkeiten herausgestellt, die bei ausreichender Umfangsänderungswirkung gleichzeitig eine wenig aufwendige Fertigung gewährleisten.

Eine Stufe nach Anspruch 12 verhindert ein Abrutschen der Schiebehülse vom Stützkörper. Insbesondere bei einer Schiebehülse aus Metall können zur Sicherung der Schiebehülse gegen Abrutschen auch Durchtrittsöffnungen oder Sacköffnungen in der Innenwand der Schiebehülse ausgeführt sein. Auch eine Strukturierung der Innenfläche zur Erhöhung der Reibung der Schiebehülse, zum Beispiel in Form einer Körnung, kann als Abrutschsicherung vorgesehen sein.

Dimensionsverhältnisse nach den Ansprüchen 13 und 14 haben sich, was die Anforderungen an die Presskraftaufnahme der Schiebehülse angeht, als guter Kompromiss zwischen Stabilität, Umfangsänderungswirkung und Herstellungsaufwand herausgestellt.

Eine Schiebehülse nach Anspruch 15 lässt sich kostengünstig fertigen.

Eine Schiebehülse nach Anspruch 16 kann beispielsweise mit einem Grundkörper aus Polyphenylsulfon (PPSU) gefertigt sein. Die versteifende Stützhülse dient dabei zum Verdrängen des Rohrmaterials beim Aufschieben der Schiebehülse.

Eine weitere Aufgabe der Erfindung ist es, eine Rohr-Baugruppe bereitzustellen, die auch bei häufigen Temperaturwechseln dicht bleibt.

Diese Aufgabe ist erfindungsgemäß gelöst durch eine Rohr-Verbindungsbaugruppe mit den im Anspruch 18 angegebenen Merkmalen. Die Vorteile dieser Rohr-Baugruppe entsprechen denjenigen, die oben im Zusammenhang mit der erfindungsgemäßen Rohr-Verbindungsbaugruppe erläutert wurden.

Sofern ein Rohr nach Anspruch 17 bei der Rohr-Verbindungsbaugruppe eingesetzt ist, kommt, soweit eine Schiebehülse mit mindestens einem Radiusänderungsabschnitt eingesetzt ist, noch ein weiterer, die Dichtheit der Rohr-Baugruppe begünstigender Effekt zum tragen. Beim Aufschieben einer derartigen Schiebehülse auf das Metall-Kunststoff-Verbundrohr wird die Metalllage durch den Radiusänderungsabschnitt plastisch verformt. Auf diese Weise wird auch in der Metalllage ein Radiusänderungsabschnitt eingeformt, sodass nicht nur die Schiebehülse, sondern auch das Metall-Kunststoff-Verbundrohr in der Lage ist, auf eine Temperaturänderung mit einer entsprechenden Umfangsänderung zu antworten, also zu "atmen". Es kann daher nicht zu dem Effekt kommen, dass das Metall-Kunststoff-Verbundrohr zum Beispiel beim Abkühlen der Rohr-Baugruppe einer thermischen Kontraktion des Stützkörpers nicht folgen kann, was, wie erfindungsgemäß erkannt wurde, zu einer Undichtigkeit der Rohr-Baugruppe führen kann.

Eine Längendimensionierung des Endabschnitts zum Stützkörper nach Anspruch 18 führt dazu, dass ein Aufschiebeabschnitt der Schiebehülse bei montierter Rohr-Verbindungsbaugruppe das Rohr nicht umgreift, da Letzteres schon ein Stück weit vor dem Anschlag für die Schiebehülse endet. Eine derartige Anordnung erlaubt es, den Aufschiebeabschnitt der Schiebehülse so zu verstärken, dass dort die Umfangsänderungswirkung nur eingeschränkt oder gar nicht vorliegt. Dies ist, solange dem Aufschiebeabschnitt kein von diesem umgriffener Rohrabschnitt zugeordnet ist, auch nicht erforderlich.

Ausführungsbeispiele der Erfindung werden nachfolgend anhand der Zeichnung näher erläutert. In dieser zeigen:
- Fig. 1: eine Rohr-Baugruppe mit einer einen Stützkörper und eine Schiebehülse aufweisenden Rohr-Verbindungsbaugruppe und einem Rohr, dessen Endabschnitt zwischen dem Stützkörper und der Schiebehülse einpressbar ist, vor dem Aufschieben des Rohrs und der Schiebehülse auf den Stützkörper;
- Fig. 2: einen vergrößerten Schnitt durch das Rohr gemäß Linie II-II in Fig. 1;
- Fig. 3: die Rohr-Baugruppe nach Fig. 1 in montiertem Zustand;
- Fig. 4: einen vergrößerten Schnitt gemäß Linie IV-IV in Fig. 3;
- Fig. 5: vergrößert eine hälftig geschnittene Seitenansicht der Schiebehülse der Rohr-Baugruppe nach Fig. 1;
- Fig. 6: einen Schnitt gemäß Linie VI-VI in Fig. 5;
- Fig. 7: eine Vergrößerung des Ausschnitts VII in Fig. 6;
- Fig. 8: vergrößert eine hälftig geschnittene Seitenansicht der Schiebehülse der Rohr-Baugruppe nach Fig. 1;
- Fig. 9: einen Schnitt gemäß Linie VIII -VIII in Fig. 8;
- Fig. 10: eine Vergrößerung des Ausschnitts X in Fig. 9;
- Fig. 11: vergrößert eine weitere Ausführungsform einer Schiebehülse in einer zur Fig. 5 ähnlichen Ansicht;
- Fig. 12: eine Ansicht der Schiebehülse nach Fig. 11 in Blickrichtung IX in Fig. 11; und
- Fig. 13 bis 16 zu den Fig. 1 bis 4: ähnliche Darstellungen einer Rohr-Baugruppe mit der Schiebehülse nach Fig. 11.

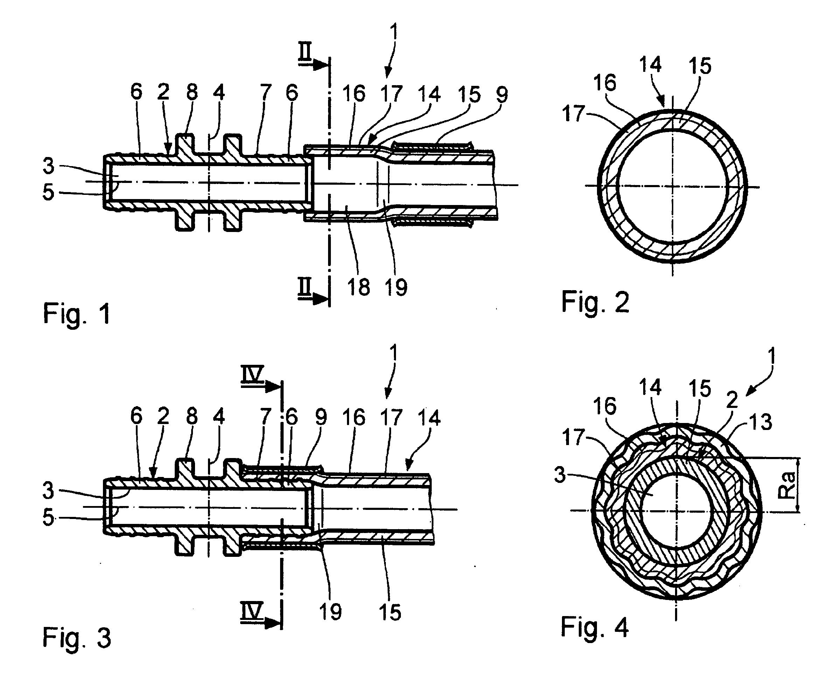

Die Fig. 1 bis 4 zeigen eine erste Ausführungsform einer Rohr-Baugruppe 1. Die Fig.1 und 2 zeigen die Rohr-Baugruppe 1 in einem Zustand vor der endgültigen Verbindungsmontage. Die Fig. 3 und 4 zeigen die Rohr-Baugruppe 1 in montiertem Zustand.

Eine Rohr-Verbindungsbaugruppe der Rohr-Baugruppe 1 umfasst einen Stützkörper 2, der auch als Fitting bezeichnet wird. Der Stützkörper 2 ist beim dargestellten Ausführungsbeispiel aus Metall. Auch eine Ausführung aus Kunststoff ist möglich. Der Stützkörper 2 ist ein Rohrverbinder und weist einen Durchgangskanal 3 für in der Rohr-Baugruppe 1 zu führendes Fluid, zum Beispiel Wasser, auf. Der Stützkörper 2 ist zu einer Mittelebene 4, die sich senkrecht zu einer Längsachse 5 des Stützkörpers 2 erstreckt, spiegelsymmetrisch. An seinen beiden freien Enden weist der Stützkörper 2 jeweils einen Stützabschnitt 6 auf. Die beiden rohrförmigen Stützabschnitte 6 haben insgesamt vier in Umfangsrichtung um die Längsachse 5 verlaufende äußere Halterippen 7. Zur Mittelebene 4 hin werden die beiden Stützabschnitte 6 jeweils von einem Anschlagbund 8 begrenzt.

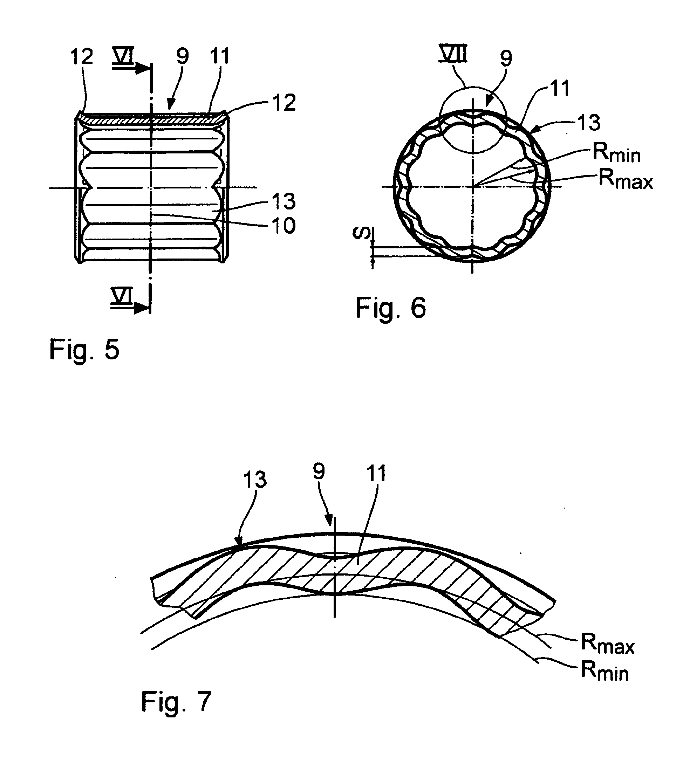

Zur Rohr-Verbindungsbaugruppe gehört ferner eine Schiebehülse 9. Die Fig. 5 bis 7 und 8 bis 10 zeigen die Schiebehülse 9 in zwei Ausführungsformen im Detail.
Diese ist bei der Ausführung nach den Fig. 1 bis 7 aus Metall, beispielsweise aus Stahl. Die Schiebehülse 9 ist zu einer Mittelebene 10, die sich senkrecht zur Längsachse 5 erstreckt, spiegelsymmetrisch. Eine Hülsenwand 11 der Schiebehülse 9 weist randseitig in dieser Ausführung jeweils einen sich konisch aufweitenden Aufschiebeabschnitt 12 auf. Es liegt jedoch auch im Rahmen der Erfindung, dass die Schiebehülse 9 nur einen Aufschiebeabschnitt 12 aufweist. Zwischen den beiden Aufschiebeabschnitten 12 weist die Hülsenwand 11 insgesamt zwölf Radiusänderungsabschnitte 13 auf, die als axiale Wellen, also parallel zur Längsachse 5 verlaufen.

In Umfangsrichtung um die Längsachse 5 ändert sich im Bereich eines Radiusänderungsabschnittes 13 der innere Hülsenradius R zwischen einem ersten, größeren Innenradius Rmax und einem zweiten, kleineren Innenradius Rmin. Jede Welle stellt daher einen Radiusänderungsabschnitt 13 der Schiebehülse 9 dar. Aufgrund der Wellenform ist dieser Radiusänderungsabschnitt 13 so geformt, dass sich ein kontinuierlicher Übergang zwischen Rmax und Rmin ergibt. Die Hülsenwand 11 der Schiebehülse 9 hat in dieser Ausführung eine konstante Wandstärke S.

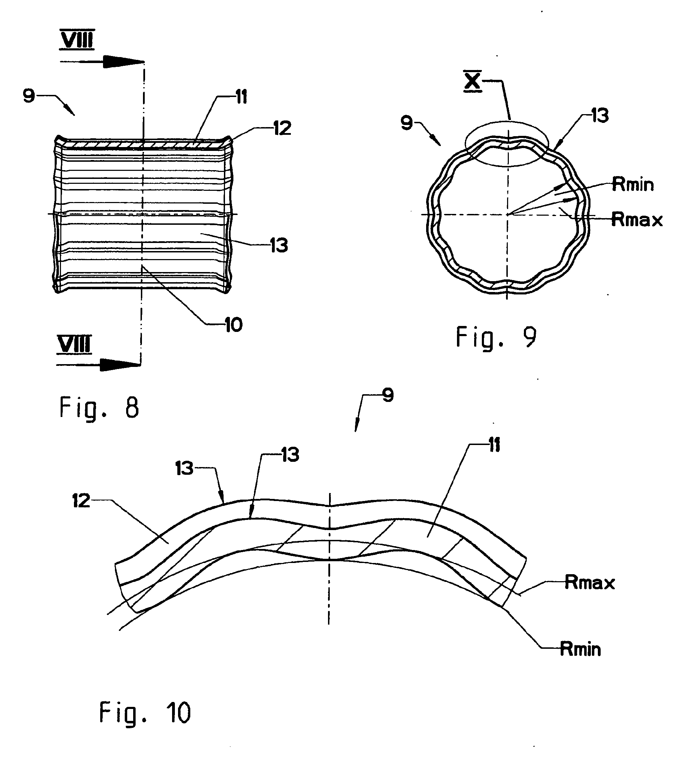

In einer weiteren Ausführung nach den Fig. 8 bis 10 ist die Schiebehülse aus Metall, beispielsweise aus Messing. Die Schiebehülse 9 ist zu einer Mittelebene 10, die sich senkrecht zur Längsachse 5 erstreckt, spiegelsymmetrisch. Eine Hülsenwand 11 der Schiebehülse 9 weist randseitig in dieser Ausführung jeweils einen sich konisch aufweitenden Aufschiebeabschnitt 12 auf. Diese Aufschiebeabschnitte 12 der Hülsenwand 11 weisen Radiusänderungsabschnitte 13 auf, die einander benachbart angeordnet sind und als axiale Wellen, also parallel zur Längsachse 5 verlaufen.
Zwischen den beiden Aufschiebeabschnitten 12 weist die Hülsenwand 11 insgesamt zwölf Radiusänderungsabschnitte 13 auf, die als axiale Wellen, also parallel zur Längsachse 5 verlaufen. In Umfangsrichtung um die Längsachse 5 ändert sich im Bereich eines Radiusänderungsabschnittes 13 der innere Hülsenradius R zwischen einem ersten, größeren Innenradius Rmax und einem zweiten, kleineren Innenradius Rmin.
Jede Welle der Hülsenwand 11 und der Aufschiebeabschnitte 12 stellt daher einen Radiusänderungsabschnitt 13 der Schiebehülse 9 dar. Aufgrund der Wellenform ist dieser Radiusänderungsabschnitt 13 so geformt, dass sich ein kontinuierlicher Übergang zwischen Rmax und Rmin ergibt. Die Hülsenwand 11 der Schiebehülse 9 hat in dieser Ausführung eine sich von einem Aufschiebeabschnitt 12 zum anderen Aufschiebeabschnitt 12 kontinuierlich verändernde Wandstärke S.

Zwischen dem Innenradiushub Rmax - Rmin der Schiebehülse 9 und einem äußeren Radius Ra des Stützkörpers 2 liegt bei der Ausführung nach den Fig. 1 bis 4 ein Verhältnis von etwa 1:10 vor. Auch andere Verhältnisse, zum Beispiel im Bereich zwischen 1:5 und 1: 50, sind, abhängig vom Absolutwert von Ra, möglich.
Generell wird das Verhältnis umso geringer, je größer der äußere Radius Ra des Stützkörpers 2 ist. Zwischen der Stärke S der Hülsenwand und dem äußeren Radius Ra des Stützkörpers 2 liegt bei der Ausführung nach den Fig. 1 bis 4 ein Verhältnis von etwa 1:7 vor. Auch andere Verhältnisse, insbesondere zwischen 1:3 und 1:40, sind möglich.

Generell wird das Verhältnis umso geringer, je größer der äußere Radius Ra des Stützkörpers 2 ist. Zwischen dem Innenradiushub Rmax - Rmin der Schiebehülse 9 und der Stärke S der Hülsenwand 11 liegt bei der Ausführung nach den Fig. 1 bis 4 ein Verhältnis von etwa 1:1,5 vor. Auch andere Verhältnisse, insbesondere zwischen 2:1 und 1:15, sind möglich. Generell wird dieses Verhältnis umso geringer, je größer der Radius Ra des Stützkörpers 2 und damit auch die Stärke S der Hülsenwand 11 ist.

Neben der Rohr-Verbindungsbaugruppe, die den Stützkörper 2 und die Schiebehülse 9 umfasst, weist die Rohr-Baugruppe 1 noch ein Rohr 14 auf. Es handelt sich hierbei um ein Metall-Kunststoff-Verbundrohr. Das Rohr 14 umfasst eine innere Kunststofflage 15, im vorliegenden Ausführungsbeispiel aus vernetztem Polyethylen (PEX). Die innere Kunststofflage 15 ist umgeben von einer Metalllage 16, die auch als Inliner bezeichnet wird. Die Metalllage 16 ist beim dargestellten Ausführungsbeispiel aus Aluminium. Auch Stahl kommt als Material für die Metalllage 16 in Frage. Die Metalllage 16 ist ihrerseits von einer Decklage 17 aus einem Kunststoff, in dieser Ausführung aus Polyethylen umgeben. Die Decklage 17 kann auch aus einem anderen Polymer bestehen und kann insbesondere auch vernetzt sein. Auf die Decklage 16 kann auch verzichtet werden.

Zur Vorbereitung der Montage der Rohr-Baugruppe 1 ist ein Endabschnitt 18 bis hin zu einer Aufweitgrenze 19 aufgeweitet. Die Länge des aufgeweiteten Endabschnitts 18 bis hin zur Aufweitgrenze 19 ist bei einer nicht dargestellten Ausführungsvariante einer Rohr-Baugruppe 1 geringer als die Länge des Stützabschnitts 6 des Stützkörpers 2 bis hin zum Anschlagbund 8.

Die Rohr-Baugruppe 1 wird folgendermaßen montiert: Zunächst wird der Endabschnitt 18 des Rohrs 14 bis zur Aufweitgrenze 19 aufgeweitet. Dies kann zum Beispiel mechanisch erfolgen. Vorher wird die Schiebehülse 9 auf das Rohr 14 so weit aufgeschoben, dass der aufgeweitete Endabschnitt 18 zunächst nicht von der Schiebehülse 9 umgeben ist. Der Stützkörper 2, das Rohr 14 und die Schiebehülse 9 werden dann zueinander in Position gebracht, wie in Fig. 1 dargestellt. Anschließend wird das Rohr 14 auf den ihm zugewandten Stützabschnitt 6 des Stützkörpers 2 aufgeschoben, bis das freie Ende des Stützabschnitts 6 an der durch die Aufweitgrenze 19 gebildeten Anschlagstufe anliegt. Anschließend wird die Schiebehülse 9 auf den Stützabschnitt 6 aufgeschoben, bis die Schiebehülse 9 am Anschlagbund 8 des Stützabschnitts 6 anliegt. Diese Endposition ist in Fig. 3 dargestellt.

Beim Aufschieben wird das Kunststoffmaterial der inneren Kunststofflage 15 des Rohres 14 zwischen der Schiebehülse 9 und dem Stützabschnitt 6 verpresst. Dabei kommt es zu einem Materialfluss des Kunststoffmaterials der inneren Kunststofflage 15 in Richtung auf den Anschlagbund 8 des Stützabschnitts 6 zu. Aufgrund der Verpressung des Endabschnitts 18 des Rohrs 14 zwischen dem Stützabschnitt 6 und der Schiebehülse 9 übt der Stützabschnitt 6 auf den Endabschnitt 18 des Rohrs 14 eine in radialer Richtung verlaufende Presskraft aus. Ebenso übt der Endabschnitt 18 des Rohrs 14 auf die Schiebehülse 9 eine in radialer Richtung verlaufende Presskraft aus.

Beim Aufschieben der Schiebehülse 9 auf den Endabschnitt 18 des Rohrs 14 kommt es aufgrund der in Umfangsrichtung sich wellenförmig ändernden Kraftausübung der Radiusänderungsabschnitte 13 auf den Endabschnitt 18 zu einer plastischen Verformung der Metalllage 16. Letztere nimmt bei aufgeschobener Schiebehülse 9 ebenfalls eine Wellenform an, welche der Form der Radiusänderungsabschnitte 13 folgt. Dies ist in Fig. 4 dargestellt.

Bei einer Temperaturerhöhung der Rohr-Baugruppe 1, zum Beispiel in Folge des Durchflusses von Warmwasser durch die Rohr-Baugruppe 1, dehnen sich der Stützkörper 2, das Rohr 14 und die Schiebehülse 9 aufgrund ihres jeweils positiven Längenausdehnungskoeffizienten aus. Aufgrund der Wellenform der Metalllage 16 im Bereich des Endabschnitts 18 einerseits und der Hülsenwand 11 im Bereich des Endabschnitts 18 andererseits führt diese Längenausdehnung zu einer Vergrößerung des Umfangs der Metalllage 16 einerseits und der Schiebehülse 9 andererseits. Die innere Kunststofflage 15 und der Stützabschnitt 6 können sich also ebenfalls ausdehnen und ihren Umfang entsprechend vergrößern. Während dieser Ausdehnung aufgrund einer Erwärmung der Rohr-Baugruppe 1 bleiben demnach alle flächigen Presskontakte zwischen dem Stützabschnitt 6, dem Rohr 14 und der Schiebehülse 9 erhalten. Die Dichtheit der Rohr-Baugruppe 1 bleibt erhalten.

Bei einer Temperaturverminderung, zum Beispiel aufgrund des Durchflusses von kaltem Wasser durch die Rohr-Baugruppe 1, kann entsprechend eine Längenkontraktion und eine damit einhergehende Umfangsverringerung des Stützabschnitts 6, des Endabschnitts 18 des Rohrs 14 und der Schiebehülse 9 stattfinden. Insbesondere die gewellte Hülsenwand 11 der Schiebehülse 9 und die gewellte Metalllage 16 können bei dieser Kontraktion ihren Umfang verringern, sodass der pressende Kontakt dieser Komponenten zueinander und auch der inneren Kunststofflage 15 zum Stützabschnitt 6 erhalten bleibt.

Auch bei einer Temperaturverringerung bleibt daher die flächige Presskraft zwischen diesen Komponenten und damit die Dichtheit der Rohr-Baugruppe 1 erhalten. Daran ändert sich auch nichts, wenn die Rohr-Baugruppe 1 viele Zyklen mit einer Temperaturerhöhung und nachfolgender Temperaturerniedrigung durchläuft.

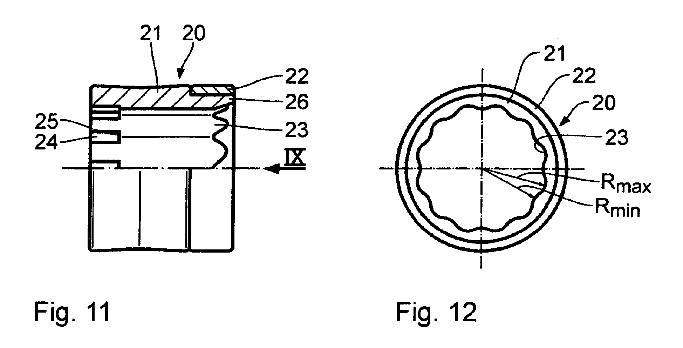

Eine alternative Ausführung einer Schiebehülse 20, die anstelle der Schiebehülse 9 bei der Rohr-Baugruppe 1 zum Einsatz kommen kann, zeigen die Fig. 11 und 12.

Die Schiebehülse 20 hat einen Grundkörper 21 aus Kunststoff, im vorliegenden Ausführungsbeispiel aus Polyphenylsulfon (PPSU). Ein Endabschnitt des Grundkörpers 21 ist außen von einem anliegenden Verstärkungsring 22 aus Metall umgeben. Die Innenwand des Grundkörpers 21 weist insgesamt zwölf axial verlaufende Radiusänderungsabschnitte 23 auf, die einander so benachbart sind, als Nuten ausgeführt und so ineinander übergehen, dass sich eine innere Wellenstruktur wie bei den Wellen 13 der Schiebehülse 9 der Ausführung nach den Fig. 1 bis 10 ergibt. Am dem Verstärkungsring 22 abgewandten Ende ist jeweils im Übergangsbereich zwischen zwei benachbarten Radiusänderungsabschnitte 23 eine Ausnehmung 24 angeordnet, sodass sich der Innenradius des Grundkörpers 21 von der Ausnehmung 24 bis hin zum Übergangsbereich zwischen zwei benachbarten Radiusänderungsabschnitten 23 über eine querverlaufende Stufe 25 erhöht.

Im Bereich des Verstärkungsrings 22 weist der Grundkörper 21 einen sich konisch erweiternden Aufschiebeabschnitt 26 auf, der ähnlich wie die Aufschiebeabschnitte 12 der Schiebehülse 9 geformt ist.
Es liegt aber auch im Rahmen der Erfindung, dass die Aufschiebeabschnitte 26 des Grundkörpers 21 Radiusänderungsabschnitte 23 aufweisen, die einander benachbart angeordnet sind und beispielsweise als axiale Wellen, also parallel zur Längsachse der des Grundkörpers 21 der Schiebehülse 20 verlaufen.

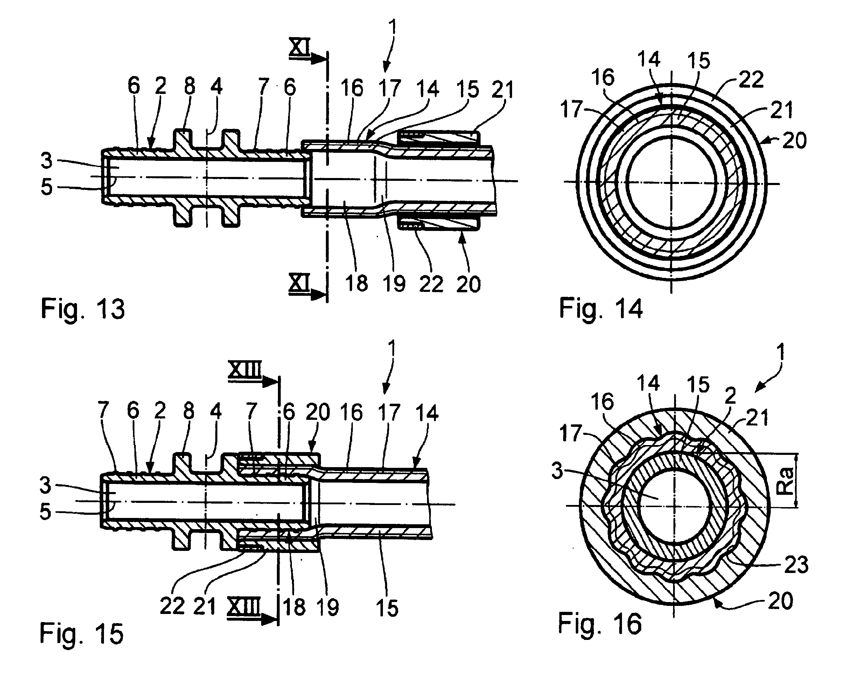

Die Montage der die Schiebehülse 20 nach den Fig. 11 und 12 aufweisenden Rohr-Baugruppe 1 wird nachfolgend nur dort beschrieben, wo sie sich von der oben beschriebenen Montage der Ausführung nach den Fig. 1 bis 7 unterscheidet. Die entsprechende Rohr-Baugruppe 1 mit der Schiebehülse 20 zeigen die Fig. 15 und 16 in montiertem Zustand und die Fig. 13 und 14 in einem Zustand vor der entgültigen Verbindungsmontage. Die Schiebehülse 20 wird auf das Rohr 14 so aufgeschoben, dass der Aufschiebeabschnitt 26 hin zum Stützkörper 2 weist. Nach dem Aufschieben des Rohrs 14 auf den Stützkörper 2 wird die Schiebehülse 20 auf das Rohr 14 und den Stützkörper 2 aufgeschoben.

Die Verdrängung des Kunststoffmaterials der inneren Kunststofflage 15 wird durch den führenden Abschnitt der Schiebehülse 20 mit dem Verstärkungsring 22 bewirkt. Dieser führende Abschnitt der Schiebehülse 20 bewirkt auch die wellenförmige Verformung der Metalllage 16 entsprechend dem, was oben im Zusammenhang mit der Montage der Ausführung nach den Fig. 1 bis 10 beschrieben wurde.
Die Stufen 25 dienen als Abrutschsicherung zur Verhinderung eines Abrutschens der Schiebehülse 20 vom Stützkörper 2. Das thermische Verhalten der Rohr-Baugruppe 1 mit der Schiebehülse 20 entspricht dem, was oben im Zusammenhang mit der Ausführung aus den Fig. 1 bis 10 beschrieben wurde. Die Schiebehülse 20 kann sich dort, wo sie nicht vom Verstärkungsring 22 umgeben ist, bei einer Temperaturerhöhung so ausdehnen, dass sich auch ihr Umfang vergrößern kann. Dieser Ausdehnung kann, wie oben schon beschrieben, das Rohr 14 aufgrund der gewellten Metalllage 16 folgen. Auch die Rohr-Baugruppe 1 mit der Schiebehülse 20 bleibt bei einer Vielzahl von Temperaturvariationen beziehungsweise - zyklen dicht, da die Innenwand der Schiebehülse 20 unter Änderung des inneren Umfangs der Schiebehülse 20 einer Änderung der durch das Rohr 14 auf die Schiebehülse 20 ausgeübten, in radialer Richtung verlaufenden Presskraft folgen kann.

Die Radiusänderungsabschnitte 13 in Form der Wellen bei der Ausführung der Schiebehülse 9 nach den Fig. 1 bis 10 und in Form der Nuten bei der Ausführung der Schiebehülse 20 nach den Fig. 11 und 12 erstrecken sich parallel zur Längsachse der jeweiligen Schiebehülse.
Bei nicht dargestellten Ausführungsvarianten von Schiebehülsen können Wellen, Nuten oder in anderer Weise ausgeformte Radiusänderungsabschnitte 13, 23 derart verlaufen, dass sie neben einer Erstreckungskomponente längs der Längsachse 5 auch eine weitere Erstreckungskomponente quer zur Längsachse 5 aufweisen. Die Radiusänderungsabschnitte 13, 23 können zum Beispiel in Form einer Schraubenwendel beziehungsweise eines Gewindes mit großer Steigung verlaufen. Schiebehülsen mit derartigen Radiusänderungsabschnitten 13, 23 werden beim Aufschieben auf den Stützkörper entsprechend auf diesen längs dieser Radiusänderungsabschnitte 13, 23 aufgedreht beziehungsweise aufgeschraubt.

Die Rohr-Baugruppe 1 kann im Heizungs- und Sanitärbereich eingesetzt werden. Auch andere Einsatzmöglichkeiten der Rohr-Baugruppe 1 sind natürlich möglich.

## Patentansprüche

1. Rohr-Verbindungsbaugruppe
- mit einem Stützkörper (2),
- mit einer auf den Stützkörper (2) derart aufschiebbaren Schiebehülse (9; 20), dass zwischen dem Stützkörper (2) und der Schiebehülse (9; 20) ein Endabschnitt (18) eines Rohres (14) einpressbar ist und
- wobei die Schiebehülse über den aufgeweiteten über den Stützkörper geschobenen Endabschnitt des Rohres aufschiebbar ist,
**dadurch gekennzeichnet,**
**dass** die Schiebehülse (9; 20) derart ausgebildet ist, dass eine Innenwand der Schiebehülse (9, 20) unter Änderung des inneren Schiebehülsenumfangs einer Änderung der durch das Rohr (14) auf die Schiebehülse (9; 20) ausgeübten, in radialer Richtung verlaufenden Presskraft folgen kann und dass die Schiebehülse (9; 20) mindestens einen Radiusänderungsabschnitt (13; 23) aufweist,
- bei dem sich der innere Hülsenradius in Umfangsrichtung zwischen einem ersten, größeren Innenradius (Rmax) und einem zweiten, kleineren Innenradius (Rmin) ändert und
- sich der Radiusänderungsabschnitt (13; 23) zumindest auch längs der Längsachse (5) der Hülsenwand (11; 21) der Schiebehülse (9; 20) erstreckt.

2. Rohr-Verbindungsbaugruppe nach Anspruch 1, **dadurch gekennzeichnet, dass** der Radiusänderungsabschnitt (13; 23) so geformt ist, dass sich ein kontinuierlicher Übergang zwischen dem größeren Innenradius (Rmax) und dem kleineren Innenradius (Rmin) ergibt.

3. Rohr-Verbindungsbaugruppe nach Anspruch 1 oder 2, **gekennzeichnet durch** ein Verhältnis zwischen dem Innenradiushub der Schiebehülse (9; 20) (Rmax - Rmin) und dem äußeren Radius (Ra) des Stützkörpers (2) zwischen 1:5 und 1:50, insbesondere im Bereich von 1:10.

4. Rohr-Verbindungsbaugruppe nach einem der Ansprüche 1 bis 3, **gekennzeichnet durch** eine Mehrzahl von Radiusänderungsabschnitten (13; 23).

5. Rohr-Verbindungsbaugruppe nach Anspruch 4, **dadurch gekennzeichnet, dass** die Schiebehülse (9; 20) eine Hülsenwand (11; 21) aufweist, bei der die Radiusänderungsabschnitte (13; 23) in Umfangsrichtung aufeinanderfolgend angeordnet sind.

6. Rohr-Verbindungsbaugruppe nach Anspruch 4, **dadurch gekennzeichnet, dass** die Schiebehülse (9; 20) eine Hülsenwand (11; 21) aufweist, bei der die Radiusänderungsabschnitte (13; 23) einander benachbart angeordnet sind.

7. Rohr-Verbindungsbaugruppe nach Anspruch 4, **dadurch gekennzeichnet, dass** die Schiebehülse (9; 20) Aufschiebeabschnitte (12, 26) aufweist, bei der die Radiusänderungsabschnitte (13; 23) einander benachbart angeordnet sind.

8. Rohr-Verbindungsbaugruppe nach Anspruch 4, **dadurch gekennzeichnet, dass** die Schiebehülse (9; 20) Aufschiebeabschnitte (12, 26) aufweist, bei der die Radiusänderungsabschnitte (13; 23) in Umfangsrichtung aufeinanderfolgend angeordnet sind.

9. Rohr-Verbindungsbaugruppe nach einem der Ansprüche 1 bis 8, **dadurch gekennzeichnet, dass** die Radiusänderungsabschnitte (13, 23) als Nuten in der Wand der Schiebehülse (9, 20) ausgeführt sind.

10. Rohr-Verbindungsbaugruppe nach einem der Ansprüche 8 bis 9, **dadurch gekennzeichnet, dass** die Radiusänderungsabschnitte (13, 23) als Wellen in der Wand der Schiebehülse (9, 20) ausgeführt sind.

11. Rohr-Verbindungsbaugruppe nach Anspruch 10, **gekennzeichnet durch** eine gewellte Hülsenwand (11) mit insbesondere axial verlaufenden Wellen.

12. Rohr-Verbindungsbaugruppe nach Anspruch 9 oder 10, **dadurch gekennzeichnet, dass** mindestens ein Radiusänderungsabschnitt (13, 23) eine querverlaufende Stufe (25) aufweist, bei der sich entgegen der Aufschiebrichtung der Schiebehülse (9; 20) der Innenradius von dieser vergrößert.

13. Rohr-Verbindungsbaugruppe nach einem der Ansprüche 1 bis 12, **gekennzeichnet durch** ein Verhältnis zwischen der Stärke (S) der Hülsenwand (11) und dem äußeren Radius (Ra) des Stützkörpers (2) im Bereich zwischen 1:3 und 1:40, insbesondere im Bereich von 1:7.

14. Rohr-Verbindungsbaugruppe nach einem der Ansprüche 1 bis 13, **gekennzeichnet durch** ein Verhältnis zwischen dem Innenradiushub der Schiebehülse (9; 20) (Rmax - Rmin) und der Stärke (S) der Hülsenwand (11) im Bereich zwischen 2:1 und 1:15, insbesondere im Bereich von 1:1,5.

15. Rohr-Verbindungsbaugruppe nach einem der Ansprüche 1 bis 14, **gekennzeichnet durch** eine Schiebehülse (9) aus Metall.

16. Rohr-Verbindungsbaugruppe nach einem der Ansprüche 1 bis 15, **gekennzeichnet durch** eine Schiebehülse (20) mit einem Grundkörper (21) aus Kunststoff, an dem der mindestens eine Radiusänderungsabschnitt (23) ausgeführt ist, und einem äußeren, den Grundkörper (21) abschnittsweise umgebenden Verstärkungsring (22) aus Metall.

17. Rohr-Verbindungsbaugruppe nach einem der Ansprüche 1 bis 16, **dadurch gekennzeichnet, dass** das Rohr (14) ein Metall-Kunststoff-Verbundrohr ist und eine innere Kunststofflage (15) und eine diese umgebende Metalllage (16) umfasst.

18. Rohr-Verbindungsbaugruppe nach Anspruch 17, **dadurch gekennzeichnet, dass** der Endabschnitt (18) gegenüber dem sonstigen Rohr (14) aufgeweitet ist, wobei die Länge des aufgeweiteten Endabschnitts (18) geringer ist als die Länge eines Stützabschnitts (6) des Stützkörpers (2) zwischen einem freien Aufschiebende und einem Anschlag (8) für die Schiebehülse (9; 20).

## Claims

1. Tube connection assembly
- having a support body (2),
- having a sliding sleeve (9; 20) which can slide onto the support body (2) in such a way that an end section (18) of a tube (14) can be pressed in between the support body (2) and the sliding sleeve (9; 20), and
- wherein the sliding sleeve can be slid on over the widened end section, which is slid over the support body, of the tube,
**characterized**
**in that** the sliding sleeve (9, 20) is designed such that an inner wall of the sliding sleeve (9, 20), with a variation of the inner sliding sleeve periphery, can follow a change of the pressing force which is exerted by the tube (14) on the sliding sleeve (9, 20) and which runs in the radial direction, and in that the sliding sleeve (9, 20) has at least one radius variation section (13, 23),
- in which the inner sleeve radius varies in the peripheral direction between a first, relatively large inner radius (Rmax) and a second, relatively small inner radius (Rmin), and
- the radius variation section (13, 23) extends at least also along the longitudenal axis (5) of the sleeve wall (11, 21) of the sliding sleeve (9, 20).

2. Tube connection assembly according to Claim 1, **characterized in that** the radius variation section (13, 23) is shaped so as to give a continuous transition between the relatively large inner radius (Rmax) and the relatively small inner radius (Rmin).

3. Tube connection assembly according to Claim 1 or 2, **characterized by** a ratio between the inner radius stroke of the sliding sleeve (9, 20) (Rmax - Rmin) and the outer radius (Ra) of the support body (2) between 1:5 and 1:50, in particular in the region of 1:10.

4. Tube connection assembly according to one of Claims 1 to 3, **characterized by** a plurality of radius variation sections (13, 23).

5. Tube connection assembly according to Claim 4, **characterized in that** the sliding sleeve (9, 20) has a sleeve wall (11, 21) in which the radius variation sections (13, 23) are arranged in succession in the peripheral direction.

6. Tube connection assembly according to Claim 4, **characterized in that** the sliding sleeve (9, 20) has a sleeve wall (11, 21) in which the radius variation sections (13, 23) are arranged adjacent to one another.

7. Tube connection assembly according to Claim 4, **characterized in that** the sliding sleeve (9, 20) has slide-on sections (12, 26) in which the radius variation sections (13, 23) are arranged adjacent to one another.

8. Tube connection assembly according to Claim 4, **characterized in that** the sliding sleeve (9, 20) has slide-on sections (12, 26) in which the radius variation sections (13, 23) are arranged in succession in the peripheral direction.

9. Tube connection assembly according to one of Claims 1 to 8, **characterized in that** the radius variation sections (13, 23) are designed as grooves in the wall of the sliding sleeve (9, 20).

10. Tube connection assembly according to one of Claims 8 to 9, **characterized in that** the radius variation sections (13, 23) are designed as corrugations in the wall of the sliding sleeve (9, 20).

11. Tube connection assembly according to Claim 10, **characterized by** a corrugated sleeve wall (11) with in particular axially running corrugations.

12. Tube connection assembly according to Claim 9 or 10, **characterized in that** at least one radius variation section (13, 23) has a transversely running step (25) at which the inner radius of the sliding sleeve (9, 20) increases counter to the slide-on direction of the latter.

13. Tube connection assembly according to one of Claims 1 to 12, **characterized by** a ratio between the thickness (S) of the sleeve wall (11) and the outer radius (Ra) of the support body (2) in the range between 1:3 and 1:40, in particular in the region of 1:7.

14. Tube connection assembly according to one of Claims 1 to 13, **characterized by** a ratio between the inner radius stroke of the sliding sleeve (9, 20) (Rmax - Rmin) and the thickness (S) of the sleeve wall (11) in the range between 2:1 and 1:15, in particular in the region of 1:1.5.

15. Tube connection assembly according to one of Claims 1 to 14, **characterized by** a sliding sleeve (9) composed of metal.

16. Tube connection assembly according to one of Claims 1 to 15, **characterized by** a sliding sleeve (20) with a base body (21) which is composed of plastic and on which is formed at least one radius variation section (23), and an outer reinforcement ring (22) which surrounds the base body (21) in sections and is composed of metal.

17. Tube connection assembly according to one of Claims 1 to 16, **characterized in that** the tube (14) is a metal/plastic composite tube and comprises an inner plastic layer (15) and a metal layer (16) which surrounds the latter.

18. Tube connection assembly according to Claim 17, **characterized in that** the end section (18) is widened with respect to the rest of the tube (14), with the length of the widened end section (18) being smaller than the length of a support section (6) of the support body (2) between a free slide-on end and a stop (8) for the sliding sleeve (9, 20).

## Revendications

1. Module de connexion pour tuyau,
- comprenant un corps de support (2),
- un manchon coulissant (9, 20) pouvant être poussé sur le corps de support (2) de telle sorte qu'une portion d'extrémité (18) d'un tuyau (14) puisse être pressée entre le corps de support (2) et le manchon coulissant (9 ; 20) et
- dans lequel le manchon coulissant peut être poussé par-dessus la portion d'extrémité du tuyau élargie et poussée par-dessus le corps de support,
**caractérisé en ce que**
le manchon coulissant (9, 20) est réalisé de telle sorte qu'une paroi interne du manchon coulissant (9, 20) puisse, par variation de la périphérie interne du manchon coulissant, suivre une variation de la force de pressage appliquée dans la direction radiale et exercée par le tuyau (14) sur le manchon coulissant (9, 20), et **en ce que** le manchon coulissant (9, 20) présente au moins une portion de rayon variable (13, 23),
- dans laquelle le rayon interne du manchon varie dans la direction périphérique entre un premier rayon interne plus grand (Rmax) et un deuxième rayon interne plus petit (Rmin), et
- la portion de rayon variable (13, 23) s'étend au moins aussi le long de l'axe longitudinal (5) de la paroi de manchon (11, 21) du manchon coulissant (9, 20).

2. Module de connexion pour tuyau selon la revendication 1, **caractérisé en ce que** la portion de rayon variable (13, 23) est formée de telle sorte qu'on obtienne une transition continue entre le rayon interne plus grand (Rmax) et le rayon interne plus petit (Rmin).

3. Module de connexion pour tuyau selon la revendication 1 ou 2, **caractérisé par** un rapport entre la course du rayon interne du manchon coulissant (9, 20) (Rmax -Rmin) et le rayon externe (Ra) du corps de support (2) compris entre 1:5 et 1:50, notamment d'environ 1:10.

4. Module de connexion pour tuyau selon l'une quelconque des revendications 1 à 3, **caractérisé par** une pluralité de portions de rayon variable (13, 23).

5. Module de connexion pour tuyau selon la revendication 4, **caractérisé en ce que** le manchon coulissant (9, 20) présente une paroi de manchon (11, 21), les portions de rayon variable (13, 23) étant disposées les unes derrière les autres dans la direction périphérique.

6. Module de connexion pour tuyau selon la revendication 4, **caractérisé en ce que** le manchon coulissant (9, 20) présente une paroi de manchon (11, 21), les portions de rayon variable (13, 23) étant disposées les unes à côté des autres.

7. Module de connexion pour tuyau selon la revendication 4, **caractérisé en ce que** le manchon coulissant (9, 20) présente des portions d'emboîtement (12, 26), les portions de rayon variable (13, 23) étant disposées les unes à côté des autres.

8. Module de connexion pour tuyau selon la revendication 4, **caractérisé en ce que** le manchon coulissant (9, 20) présente des portions d'emboîtement (12, 26), les portions de rayon variable (13, 23) étant disposées les unes derrière les autres dans la direction périphérique.

9. Module de connexion pour tuyau selon l'une quelconque des revendications 1 à 8, **caractérisé en ce que** les portions de rayon variable (13, 23) sont réalisées sous forme de rainures dans la paroi du manchon coulissant (9, 20).

10. Module de connexion pour tuyau selon la revendication 8 à 9, **caractérisé en ce que** les portions de rayon variable (13, 23) sont réalisées sous forme d'ondulations dans la paroi du manchon coulissant (9, 20).

11. Module de connexion pour tuyau selon la revendication 10, **caractérisé par** une paroi de manchon ondulée (11) avec en particulier des ondulations s'étendant axialement.

12. Module de connexion pour tuyau selon la revendication 9 ou 10, **caractérisé en ce qu'**au moins une portion de rayon variable (13, 23) présente un gradin (25) s'étendant transversalement, le rayon interne augmentant depuis ce gradin dans la direction opposée à la direction d'emboîtement du manchon coulissant (9 ; 20).

13. Module de connexion pour tuyau selon l'une quelconque des revendications 1 à 12, **caractérisé par** un rapport entre l'épaisseur (S) de la paroi de manchon (11) et le rayon externe (Ra) du corps de support (2) compris entre 1:3 et 1:40, notamment d'environ 1:7.

14. Module de connexion pour tuyau selon l'une quelconque des revendications 1 à 13, **caractérisé par** un rapport entre la course du rayon interne du manchon coulissant (9, 20) (Rmax - Rmin) et l'épaisseur (S) de la paroi de manchon (11) compris entre 2:1 et 1:15, notamment d'environ 1:1,5.

15. Module de connexion pour tuyau selon l'une quelconque des revendications 1 à 14, **caractérisé par** un manchon coulissant (9) en métal.

16. Module de connexion pour tuyau selon l'une quelconque des revendications 1 à 15, **caractérisé par** un manchon coulissant (20) avec un corps de base (21) en plastique, sur lequel est réalisée l'au moins une portion de rayon variable (23), et avec une bague de renfort extérieure (22) en métal, entourant en partie le corps de base (21).

17. Module de connexion pour tuyau selon l'une quelconque des revendications 1 à 16, **caractérisé en ce que** le tuyau (14) est un tuyau composite métal-plastique, et comprend une couche interne de plastique (15) et une couche de métal (16) l'entourant.

18. Module de connexion pour tuyau selon la revendication 17, **caractérisé en ce que** la portion d'extrémité (18) est élargie par rapport au reste du tuyau (14), la longueur de la portion d'extrémité élargie (18) étant plus courte que la longueur d'une portion de support (6) du corps de support (2) entre une extrémité d'emboîtement libre et une butée (8) pour le manchon coulissant (9, 20).
